# EUROPÄISCHE PATENTSCHRIFT

(11) **EP 1 428 433 B1**
(45) Veröffentlichungstag und Bekanntmachung des Hinweises auf die Patenterteilung: **22.03.2006**
(21) Anmeldenummer: 03027592.9
(22) Anmeldetag: 02.12.2003
(51) Int. Cl.: A01M 7/00, B05B 9/04

(54) **Spritzsystem**
Spraying system
Système de pulvérisation

(30) Priorität: 13.12.2002 DE 10258217
(43) Veröffentlichungstag der Anmeldung: 16.06.2004
(73) Patentinhaber: John Deere Fabriek Horst B.V., 5961 PT Horst (NL)
(72) Erfinder: Wilting, Jaap, 7021 GJ Zelhem (NL)
(74) Vertreter: Magin, Ludwig Bernhard

(56) Entgegenhaltungen:
- EP-A- 0 820 224
- EP-A- 1 240 826
- FR-A- 2 555 469
- FR-A- 2 616 084

## Beschreibung

Die Erfindung betrifft ein Spritzsystem mit einem Tank, einer Pumpe, einer Zuführleitung, wenigstens einem Spritzdüsensystem, einer Rückführleitung und einem in der Rückführleitung einen Unterdruck erzeugendes Mittel.

Zur Verteilung von Flüssigkeiten oder Gemischen, wie z. B. Pestizide, Herbizide, Dünger oder andere flüssige Chemikalien, werden in der Landwirtschaft bei der Behandlung von Feldfrüchten Spritzsysteme in verschiedenen Ausführungen eingesetzt. Oftmals tritt das Problem auf, dass die zu spritzende bzw. zu verteilende Flüssigkeit aufgerührt bzw. stets in Fließbewegung gehalten werden kann, damit es zu keinen Entmischungserscheinungen bzw. Ablagerungen im Spritzsystem kommt, wodurch zum einen Verstopfungen des Spritzsystems auftreten und zum anderen die Flüssigkeit oder das Gemisch ungleichmäßige Konzentration aufweisen könnten. Diesem Problem versucht man im Stand der Technik mit sogenannten Zirkulationssystemen zu begegnen. Bei derartigen Systemen kann die zu versprühende Flüssigkeit in einem Kreislauf geführt werden, insbesondere bei Spritzbetriebunterbrechungen oder bei Teilbreitenbearbeitung, so dass eine kontinuierliche Flüssigkeitsbewegung in möglichst allen Leitungen des Spritzsystems vorliegt und keine Entmischungserscheinungen oder Ablagerungen stattfinden. Diese Systeme verfügen oftmals über separat angesteuerte Spritzdüsen, wie beispielsweise pneumatisch oder elektrisch schließende Spritzdüsen um den Austritt der Spritzflüssigkeit an den Spritzdüsen, zu vermeiden, wenn die Flüssigkeit zur Zirkulation daran vorbeigeführt werden muss. Derartige Spritzdüsensysteme sind jedoch aufwändig und kostenintensiv.

Ein Zirkulationssystem wird beispielsweise in der DE 34 01 734 offenbart, wobei eine Spritz- bzw. Sprühvorrichtung eine Rückführleitung enthält, mit der die zu versprühende Flüssigkeit in einem stetigen Bewegungskreislauf gehalten werden kann. Nachteilig wirkt sich hierbei aus, dass bei Spritzbetriebunterbrechungen keine Zirkulation mehr stattfinden und es bei der im Spritzsystem verbleibenden Flüssigkeit zu Ablagerungen kommen kann.

Ein weiteres Spritzsystem stellt das in der FR 2 678 181 offenbarte Spritzgerät dar, bei dem über eine Rückführleitung und über ein in der Rückführleitung angeordnetes Steuerventil ein Flüssigkeitskreislauf hergestellt werden kann. Hierbei wird bei eingestelltem Spritzbetrieb bzw. bei Spritzbetriebunterbrechung durch Öffnen des Steuerventils ein Flüssigkeitskreislauf gebildet. Nachteilig wirkt sich hierbei aus, dass während des Spritzbetriebs keine Zirkulation der Flüssigkeit ermöglicht wird, so dass es bei der in der Rückführleitung zurückbleibenden Flüssigkeit zu Ausscheidungen und Entmischungen kommen kann. Des Weiteren können die Spritzdüsen nicht getrennt voneinander betrieben werden, so dass keine Teilbreitenbearbeitung ermöglicht wird.

Des Weiteren wird ein Spritzsystem in einem Prospekt der Firma Amazone mit dem Druckvermerk MI 126 / S 233 (D) 04.02 offenbart, welches als Druck-Umlauf-System (DUS) für Anhängefeldspritzen bezeichnet wird. Hierbei wird ein Zirkulationssystem durch Fließrichtungsumkehr realisiert, wobei ein Dreiwegeventil enthalten ist, welches zwischen einer Zuführleitung, einer Rückführleitung und einem Spritzdüsensystem enthalten ist, wobei das Spritzdüsensystem als Kreisleitung ausgebildet ist und durch Steuerung des Dreiwegeventils die Fließrichtung im Spritzdüsensystem umkehrbar ist. Nachteilig wirkt sich aus, dass während des Spritzbetriebes in der Kreisleitung des Spritzdüsensystems in einem Teilbereich keine Flüssigkeitsbewegung stattfindet, so dass sich in diesem Teil Partikel ablagern können. Des Weiteren sind zur Realisierung dieses Systems zusätzliche Mittel erforderlich, die dieses System aufwändig und kostspielig gestalten.

Ferner offenbart die EP 820 224 B1 ein Spritzgerät, welches über eine mit Unterdruck versehene Rückführleitung und über eine neben einer Hauptzuführleitung zusätzlichen Zuführleitung eine Zirkulation der Flüssigkeit während Spritzbetriebunterbrechungen ermöglicht. Nachteilig wirkt sich bei diesem Gerät aus, dass während des Spritzbetriebs bei Teilbreitenbearbeitung die in der Rückführleitung und in der zusätzlichen Zuführleitung verbleibende Flüssigkeit nicht zirkuliert, da nur während der Spritzbetriebunterbrechung ein Unterdruck erzeugt werden kann.

Das durch die Erfindung zu lösende Problem wird darin gesehen, dass die bekannten Spritzsysteme aufwändig und kostenintensiv sind und/oder keine Zirkulation der Spritzflüssigkeit bei Spritzbetriebunterbrechung oder Teilbreitenbearbeitung ermöglichen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Erfindungsgemäß wird ein Spritzsystem der eingangs genannten Art mit einer Rückführleitung versehen, die mit einem Unterdruck bzw. einem Saugdruck behaftet eine nicht aus den Spritzdüsen ausgetretene Flüssigkeit, beispielsweise während einer Spritzbetriebunterbrechung oder bei einer Teilbreitenbearbeitung, in den Vorratstank zurückfördert. Dabei sind Zuführleitungen, die das zu versprühende Medium zu einen oder mehreren Spritzdüsensystemen fördern, mit jeweils einem Drosselmittel versehen und zwischen Spritzdüsensystem und Rückführleitung ist jeweils ein Steuerventil angeordnet. Durch Schließen des Steuerventils staut sich die Flüssigkeit im Spritzdüsensystem auf und tritt über die Spritzdüsen aus. Durch Öffnen des Steuerventils wird ein Zugang zur Rückführleitung freigegeben und der in der Rückführleitung herrschende Unterdruck breitet sich auf das Spritzdüsensystem bzw. bis zu der Drosselmittelstelle in der Zuführleitung auch auf die Zuführleitung aus. Durch den Unterdruck wird der Flüssigkeitsaustritt an den Spritzdüsen unterbrochen und die Flüssigkeit über die Rückführleitung in den Tank bzw. Vorratsbehälter zurückgefördert. Bei der Verwendung mehrerer Spritzdüsensysteme, die jeweils über mehrere Spritzdüsen verfügen und durch die am Spritzgestänge unterschiedlich positionierte Teilbreiten gebildet werden, kann auf einfache Weise eine Teilbreitenbearbeitung erfolgen, indem die Steuerventile, welche gleichzeitig als Teilbreitenventile dienen, unterschiedlich geöffnet bzw. geschlossen werden. Die in der Zulaufleitung mit Überdruck geförderte Flüssigkeit tritt in den Teilbreiten mit geschlossenem Steuerventil aus den Spritzdüsen aus, während die Flüssigkeit in den Teilbreiten mit geöffneten Steuerventilen über die Rückführleitung zurückgefördert wird und somit zirkuliert. Werden die Steuerventile aller Teilbreiten geöffnet, so tritt eine Spritzbetriebunterbrechung ein und die Flüssigkeit wird im gesamten Spritzsystem nur umgewälzt bzw. zirkuliert. Damit wird gewährleistet, dass bei Spritzbetriebunterbrechung und bei Teilbreitenbetrieb des Spritzsystems keine Entmischungen und/oder Ablagerungen in den Spritzleitungen stattfinden. Der sich bei Öffnen der Steuerventile aufbauende Unterdruck verhindert zudem ein Nachtropfen der Spritzdüsen und damit ungewollten Austritt von Spritzenflüssigkeit. Werden alle Teilbreiten zugeschaltet, d. h. alle Spritzdüsensysteme werden aktiviert und alle den Teilbreiten zugeordnete Steuerventile werden geschlossen, so findet keine Zirkulation in der Rückführleitung statt. Dies ist jedoch ohne weitere Bedeutung für einen darauffolgenden Spritzprozess bei erneuter Zuschaltung eines oder mehrerer Spritzdüsensysteme, da zum einen eventuell stattfindende Entmischungen oder Ablagerungen nicht in den Bereich der Spritzdüsen gelangen können und zum anderen durch kurzes Abschalten einer Teilbreite die Rückführleitung durchspült werden kann.

Als Unterdruck erzeugendes Mittel für die Rückführleitung dient vorzugsweise ein Injektor oder eine sogenannte Venturi-Vorrichtung. Derartige Bauteile sind Stand der Technik und werden mit einem Flüssigkeitsstrom angetrieben, wobei diese auf ihrer Saugseite einen Unterdruck erzeugen, der ebenfalls zur Förderung von Flüssigkeit genutzt werden kann.

Erfindungsgemäß wird der Injektor durch die gleiche Pumpe betrieben, die auch die Spritzflüssigkeit fördert, bzw. der Injektor wird durch die von der Pumpe geförderte Flüssigkeit betrieben. Dazu wird eine Abzweigleitung von der Zuführleitung direkt zu dem Injektor geführt. Die Pumpe besitzt somit ausreichend hohe Pumpleistung zur Förderung der Flüssigkeit vom Tank zu den Spritzdüsensystemen bzw. zu den Teilbreiten und zur gleichzeitigen Versorgung des Injektors, der die Flüssigkeit durch die Rückführleitung in den Tank zurückfördert. Der Injektor ist vorzugsweise direkt am Tank positioniert, so dass die den Injektor betreibende Flüssigkeit auf kürzestem Wege direkt wieder in den Tank gespült wird.

Das in der Zulaufleitung des Spritzdüsensystems angeordnete Drosselmittel ist derart ausgelegt, dass der Durchlassquerschnitt bzw. der Austrittsquerschnitt des Drosselmittels wenigstens die gleiche Größe besitzt, wie der gesamte Auslassquerschnitt des betreffenden Spritzdüsensystems. Zur Erzeugung bzw. Aufrechterhaltung des für einen Saugeffekt an den Austrittsdüsen bzw. Spritzdüsen des Spritzdüsensystems erforderlichen Unterdrucks muss das Drosselmittel auf die Anzahl und Auslassquerschnitte der an das Spritzdüsensystem angeschlossenen Spritzdüsen angepasst werden. Ist der Ausgangsquerschnitt bzw. der Durchlassquerschnitt des Drosselmittels zu groß, so würde das Druckgefälle nicht ausreichen, um die mit einer Anti-Tropf-Membran versehenen Spritzdüsen zu schließen. Ist der Durchlassquerschnitt zu klein, so kann der erforderliche Spritzdruck zur Auslastung der Spritzdüsen nicht aufgebracht werden.

Erfindungsgemäß können mehrere Spritzdüsensysteme bzw. Teilbreiten an das System angeschlossen werden. Maßgeblich für den Betrieb mehrerer Spritzdüsensysteme bzw. Teilbreiten sind neben den konstruktiven Auslegungen des Spritzapparats bzw. des Spritzgestänges im Wesentlichen die Förderleistungen von Pumpe und Injektor. Über entsprechende Verteilerstellen können mehrere Spritzdüsensysteme bzw. Teilbreiten parallel an eine Zuführleitung angeschlossen werden, wobei jeder Teilbreite gesondert ein Drosselmittel vorgeschaltet und ein Steuerventil zur parallelen Verbindung an eine Rückführleitung nachgeschaltet ist. Über Ansteuerung der Steuerventile können die verschiedenen Spritzdüsensysteme bzw. Teilbreiten unabhängig voneinander zu- bzw. abgeschaltet werden, so dass Flüssigkeit mit den zugeschalteten Spritzdüsensystemen versprüht wird, während gleichzeitig die Flüssigkeit durch die abgeschalteten Spritzdüsensysteme und durch die Rückführleitung zirkuliert.

Um einen ausreichend hohen Unterdruck in der Rückführleitung zu erzeugen, wird der Injektor mit einem höheren Betriebsdruck beaufschlagt als die Zuführleitungen. Dazu wird ein Druckregler bzw. Primärdruckregler eingesetzt, der vorzugsweise zwischen der Abzweigleitung für den Injektor und dem Spritzdüsensystem angeordnet ist und den von der Pumpe erzeugten Druck herunterregelt. Ein weiterer Druckregler bzw. Betriebsdruckregler wird vorzugsweise zwischen dem ersten Druckregler und dem Spritzdüsensystem angeordnet und ermöglicht die Regelung des Betriebsdruckes zum Versprühen der Flüssigkeit. Dadurch ist der Druck in der Injektorleitung und in der Zuführleitung unabhängig voneinander regulierbar.

Die Drosselung der Flüssigkeit in der Zulaufleitung zur Druckminderung am Spritzdüsensystem kann durch beliebige Drosselmittel erreicht werden. Beispielsweise wird eine Drosselung durch eine einfache konstruktive Verengung der Zulaufleitung erreicht. Denkbar sind aber auch Mittel, wie z. B. ein durchflussreduzierendes Ventil oder eine Blende, die zwischen die Zulaufleitung angeordnet oder in die Zulaufleitung eingebracht werden. In einer bevorzugten Ausgestaltung der Erfindung werden variable Drosselmittel eingesetzt, so dass bei einem Wechsel der Spritzdüsen eine einfache Anpassung der Drosselmittel an die Spritzdüsen erfolgen kann.

In einer weiteren Ausgestaltung der Erfindung ist das Spritzsystem mit einer Vorrichtung versehen, die es ermöglicht, den Zufluss in der Zulaufleitung abzusperren und gleichzeitig eine Entlüftung einzuleiten. Durch geeignete Anordnung dieser Vorrichtung, beispielsweise zwischen der Abzweigleitung des Injektors und dem Spritzdüsensystem, können ein Großteil der Leitungen des Spritzsystems durch den vom Injektor produzierten Unterdruck leergesaugt und die gesamte nach einem Reinigungsvorgang oder Spritzvorgang in den Leitungen verbleibende Flüssigkeit in den Tank gefördert werden.

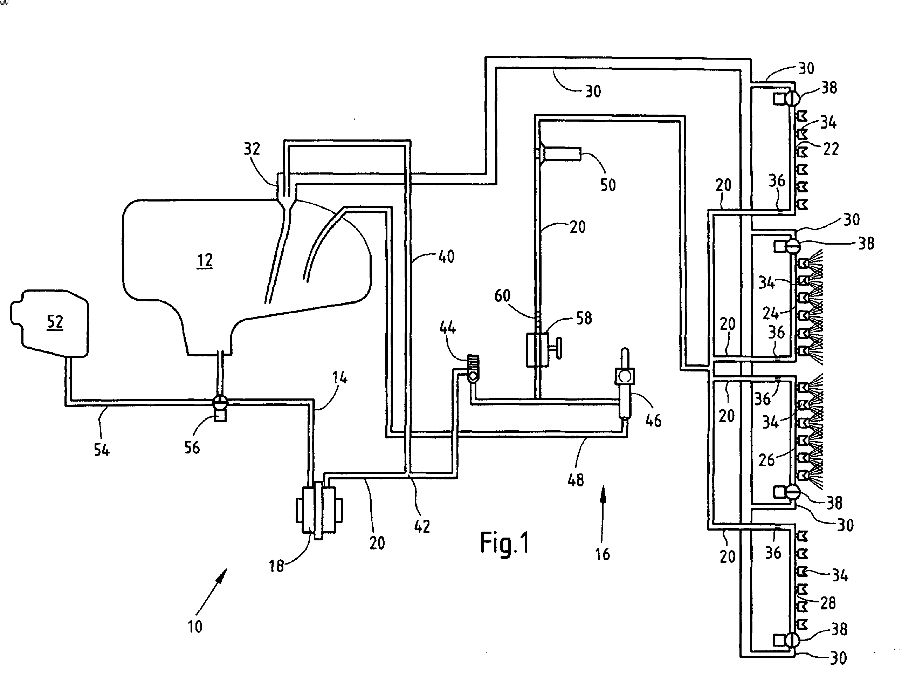

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die Figur zeigt ein Schaltbild eines erfindungsgemäßen Spritzsystems mit mehreren parallel angeordneten Spritzdüsensystemen bzw. Teilbreiten.

In der Figur ist ein Spritzsystem 10 dargestellt mit einem Tank 12 für zu versprühende Flüssigkeit und einer Versorgungsleitung 14, durch die Flüssigkeit zu einer mit einem Spritzleitungssystem 16 verbundenen Pumpe 18 geleitet wird.

Das Spritzleitungssystem 16 enthält eine Zuführleitung 20, die mit der Eingangsseite von Spritzdüsensystemen 22, 24, 26, 28 in Verbindung steht. In der Figur sind nur vier Spritzdüsensysteme 22, 24, 26, 28 dargestellt, wobei auch die Anordnung von mehr oder weniger Spritzdüsensystemen denkbar ist. Auf der Ausgangsseite stehen die Spritzdüsensysteme 22, 24, 26, 28 mit einer Rückführleitung 30 in Verbindung, welche wiederum an ihrem den Spritzdüsensystemen 22, 24, 26, 28 entfernten Ende mit der Saugseite eines Injektors 32 verbunden ist.
Die Spritzdüsensysteme 22, 24, 26, 28 sind mit mehreren Spritzdüsen 34 versehen, die vorzugsweise jeweils mit einer Anti-Tropf-Membran (nicht dargestellt) ausgestattet sind, welche durch Aufbringen eines Spritzdruckes die Spritzdüse 34 öffnet und durch Aufbringen eines Saugdruckes die Spritzdüse 34 schließt.

Die Spritzdüsensysteme 22, 24, 26, 28 sind eingangsseitig jeweils mit einem Drosselmittel 36 versehen, so dass die durch die Zuführleitung 20 geförderte Flüssigkeit einen Druckabfall erfährt. Vorzugsweise wird als Drosselmittel 36 eine einfache Blende in die Zuführleitung 20 der jeweiligen Spritzdüsensysteme 22, 24, 26, 28 eingebracht, wobei der Durchlassquerschnitt einer Blende wenigstens die gleiche Größe besitzt wie die Summe der Auslassquerschnitte der Spritzdüsen 34 am jeweiligen Spritzdüsensystem 22, 24, 26, 28. Vorzugsweise ist der Durchlassquerschnitt einer jeden Spritzdüse 34 geringfügig größer als die Summe der Auslassquerschnitte der Spritzdüsen 34 am jeweiligen Spritzdüsensystem 22, 24, 26, 28. In dem in der Figur dargestellten Ausführungsbeispiel sind die jeweiligen Spritzdüsensysteme 22, 24, 26, 28 mit der gleichen Anzahl von Spritzdüsen 34 versehen, die alle einen gleich großen Auslassquerschnitt besitzen, so dass die dargestellten Drosselmittel 36 ebenfalls den gleichen Durchlassquerschnitt aufweisen. Für den Fall, dass die jeweiligen Spritzdüsensysteme 22, 24, 26, 28 unterschiedlich viele Spritzdüsen 34 aufweisen, müssen dementsprechend auch die Drosselmittel 36 in ihren jeweiligen Durchlassquerschnitten an den Gesamtauslassquerschnitt des jeweiligen Spritzdüsensystems 22, 24, 26, 28 angepasst werden. Gleiches gilt für den Fall, dass die jeweiligen Spritzdüsensysteme 22, 24, 26, 28 Spritzdüsen 34 mit unterschiedlichen Auslassquerschnitten enthalten.

Ausgangsseitig ist zwischen den Spritzdüsensystemen 22, 24, 26, 28 und der Rückführleitung 30 jeweils ein Steuerventil 38 angeordnet, das als einfaches Absperrventil ausgebildet sein kann. Durch Schließen und Öffnen der Steuerventile 38 können die Spritzdüsensysteme 22, 24, 26, 28 unabhängig voneinander angesteuert werden, wie im Folgenden näher beschrieben wird.

Der Injektor 32 ist auf seiner Eingangsseite mit einer Abzweigleitung 40 verbunden. Die Abzweigleitung 40 führt von einer Abzweigstelle 42 direkt zum Injektor 32, der durch die von der Pumpe 18 geförderten Flüssigkeit betrieben wird, wobei der Injektor 32 derart angeordnet ist, dass die Flüssigkeit direkt nach Durchströmen des Injektors 32 in den Tank 12 strömt.

Der Injektor 32 wird mit einem Injektorbetriebsdruck betrieben, der über dem Spritzdruck liegt, mit dem die Flüssigkeit an den Spritzdüsen 34 ansteht. Um sowohl den Injektorbetriebsdruck als auch den Spritzdruck zu regulieren, sind in der Zuführleitung 20 ein Primärdruckregler 44 und ein Spritzdruckregler 46 angeordnet. Zur Druckregulierung mit dem Spritzdruckregler 46 ist eine Druckausgleichsleitung 48 enthalten, die überschüssige Flüssigkeit zurück in den Tank 12 leitet. Der bei der Förderung durch die Pumpe 18 erzeugte Primärdruck wird mittels des Primärdruckreglers 44 auf Injektorbetriebsdruck abgesenkt, so dass die durch die Abzweigleitung 40 strömende Flüssigkeit den Injektor 32 mit einem auf den Injektor 32 bzw. mit einem auf den durch den Injektor 32 zu erzeugenden Unterdruck abgestimmten Injektorbetriebsdruck durchströmt. Bei dem hier dargestellten Ausführungsbeispiel wird vorzugsweise ein Injektorbetriebsdruck von ca. 8 bar erzeugt.
Die durch die Zuführleitung 20 strömende Flüssigkeit wird nach Durchströmen des Primärdruckreglers 44 durch den Spritzdruckregler 46 gedrosselt bzw. entsprechend einem vorgebbaren Wert ausgeglichen, so dass sich ein über den Spritzdruckregler 46 regelbarer und vorgebbarer Spritzdruck einstellt, mit dem die Flüssigkeit durch die Zuführleitung 20 den Spritzdüsensystemen 22, 24, 26, 28 zugeführt wird. Vor Erreichen der Spritzdüsensysteme 22, 24, 26, 28 wird die Flüssigkeit durch einen Filter 50 geführt, der die Spritzdüsensysteme 22, 24, 26, 28 vor Verunreinigungen schützt. Die bei dem Druckausgleich am Spritzdruckregler 46 abzuführende Flüssigkeit wird über die Druckausgleichsleitung 48 dem Tank 12 zugeführt.

Der Flüssigkeitskreislauf in dem in der Figur dargestellten Ausführungsbeispiel stellt sich wie folgt dar. Die zu versprühende, sich im Tank 12 befindliche Flüssigkeit wird über die Versorgungsleitung 14 mittels der Pumpe 18 durch die Zuführleitung 20 unter Primärdruck gefördert. Ein Teil der Flüssigkeit wird unter Injektorbetriebsdruck über die Abzweigleitung 40 dem Injektor 32 zugeführt und erzeugt an seiner Saugseite einen Unterdruck, wobei die Saugseite des Injektors 32 mit der Rückführleitung 30 verbunden ist. Der Unterdruck breitet sich über die Rückführleitung 30 bis hin zu den Spritzdüsensystemen 22, 24, 26, 28 aus. Die durch den Injektor 32 strömende Flüssigkeit wird in den Tank 12 geleitet. Die in der Zuführleitung 20 verbleibende Flüssigkeit wird über den Spritzdruckregler 46 auf einen Spritzdruck heruntergeregelt und gelangt durch den Filter 50 an die mit Drosselmittel 36 versehenen Drosselstellen, bevor die Spritzdüsensysteme 22, 24, 26, 28 von der Flüssigkeit durchströmt werden. In Abhängigkeit von der Stellung der Steuerventile 38 wird die Flüssigkeit entweder in die Rückführleitung 30 geleitet oder durch die Spritzdüsen 34 versprüht.

Durch die in der Zuführleitung 20 eingebrachten Drosselmittel 36 wird ein Druckabfall in der Flüssigkeit erzeugt. Befindet sich ein Steuerventil 38 in geschlossener Stellung, so wird ein Zugang zur Rückführleitung 30 versperrt und es baut sich der Spritzdruck auf, so dass die Flüssigkeit aus den Spritzdüsen 34 austritt. Befindet sich hingegen ein Steuerventil 38 in geöffneter Stellung, wird ein Zugang zur Rückführleitung 30 freigegeben und der in der Rückführleitung 30 vorliegende Unterdruck baut sich bis hin zum Drosselmittel 36 auf, so dass auch das jeweilige Spritzdüsensystem 22, 24, 26, 28 mit einem Unterdruck behaftet ist und die Anti-Tropf-Membranen die Spritzdüsen 34 schließen. Als Folge dessen wird aufgrund des in der Rückführleitung 30 vorherrschenden Unterdrucks die durch die Zuführleitung 20 des jeweiligen Spritzdüsensystems 22, 24, 26, 28 geleitete Flüssigkeit über die Rückführleitung 30 durch den Injektor 32 in den Tank 12 gefördert, so dass die Flüssigkeit zirkulieren kann.

Beispielhaft sind in der Figur die Steuerventile 38 der Spritzdüsensysteme 22 und 28 in geöffneter Stellung und die Steuerventile 38 der Spritzdüsensysteme 24 und 26 in geschlossener Stellung dargestellt. In den Spritzdüsensystemen 22 und 28 liegt folglich der in der Rückführleitung 30 vorherrschende Unterdruck an, so dass die Spritzdüsen 34 geschlossen sind und die durch die Drosselmittel 36 strömende Flüssigkeit in den Spritzdüsensystemen 22 und 28 über die entsprechende Rückführleitung 30 durch die Saugseite des Injektors 32 in den Tank 12 gefördert wird bzw. zirkuliert. Gleichzeitig liegt in den Spritzdüsensystemen 24 und 26 der in der Zuführleitung 20 vorherrschende Spritzdruck an, so dass die Spritzdüsen 34 geöffnet sind und die durch die Drosselmittel 36 strömende Flüssigkeit aus den Spritzdüsensystemen 24 und 26 austritt bzw. versprüht wird. Die jeweiligen Spritzdüsensysteme 22, 24, 26, 28 können demnach unabhängig voneinander durch die entsprechenden Steuerventile 38 zu- bzw. abgeschaltet werden, so dass beispielsweise auch nur eines der Spritzdüsensysteme 22, 24, 26, 28 Flüssigkeit versprüht bzw. nur eines der Spritzdüsensysteme 22, 24, 26, 28 geschlossene Spritzdüsen 34 aufweist. Wenn alle Steuerventile 38 geöffnet sind, zirkuliert die Flüssigkeit durch die Rückführleitung 30, ohne dass Flüssigkeit durch die Spritzdüsensysteme 22, 24, 26, 28 versprüht wird. Wenn alle Steuerventile 38 geschlossen sind, findet keine Zirkulation durch die Rückführleitung 30 statt, so dass die durch die Zuführleitung 20 geförderte Flüssigkeit versprüht wird.

Zusätzlich zum Tank 12 für zu versprühende Flüssigkeit ist ein weiterer Spülwassertank 52 enthalten, der über einen Zulauf 54 und ein Dreiwegeventil 56 mit der Versorgungsleitung 14 verbunden ist. Zur Durchführung eines Reinigungsvorganges des Spritzsystems 10 kann durch Ansteuerung des Dreiwegeventils 56 die Versorgungsleitung 14 mit dem Zulauf 54 verbunden werden, so dass Spülwasser oder Spülflüssigkeit in den Flüssigkeitskreislauf gepumpt werden kann und durch Zirkulation der Spülflüssigkeit die Leitungen 20, 30, 40 im Spritzsystem 10 gereinigt werden. Dabei ist es auch denkbar, den Tank 12 nur mit Wasser zu befüllen und die chemischen Zusätze über den Spülwassertank 52 in das Spritzsystem 10 einzuführen. Durch entsprechende Zirkulierung der Flüssigkeiten kann dann eine Mischung des Wassers mit den chemischen Zusätzen erfolgen.

In einer weiteren Fortbildung ist das Spritzsystem 10 mit einer Absperrvorrichtung 58 versehen, die mit einer Entlüftungsvorrichtung 60 kombiniert wird. Durch die Absperrvorrichtung 58 kann der Zulauf von Flüssigkeit in die Zulaufleitung 20 unterbrochen werden, so dass sich bei geöffneten Steuerventilen 38 über die Rückführleitung 30 ein Unterdruck bis zur Absperrvorrichtung 58 ausbreitet. Durch die mit der Absperrvorrichtung 58 kombinierte Entlüftungsvorrichtung 60 kann dann das gesamte in Förderrichtung hinter der Absperrvorrichtung 58 liegende Leitungssystem bis zum Injektor 32 entleert bzw. mittels Unterdruck ausgesaugt werden, wobei die Flüssigkeit über die Rückführleitung 30 in den Tank 12 gefördert wird.

Auch wenn die Erfindung lediglich anhand der Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung nach den nachstehenden Patentansprüchen fallen. So kann das Spritzsystem 10 beispielsweise zusätzlich mit Durchflussmessern ausgerüstet werden, die zum einen den Durchfluss in der Rückführleitung 30 und zum anderen den Durchfluss in der Zuführleitung 20 messen und über Differenzbildung die versprühte Flüssigkeitsmenge genau ermitteln. Des Weiteren sind Systeme, wie z. B. Reinigungsdüsen im Tank oder Umwälzsysteme bekannt, die zusätzlich in Verbindung mit der Pumpe 18, insbesondere aber auch in Verbindung mit einer weiteren Pumpe arbeiten und zur Reinigung des Tanks 12 bzw. Umwälzung des Tankinhalts eingesetzt werden. Ferner können zusätzliche Tanks oder Behälter an das Leitungssystem angeschlossen werden, durch die, ähnlich wie die Spülwasserzuführung, andere Flüssigkeiten oder Chemikalien dem System zugeführt werden können.

## Patentansprüche

1. Spritzsystem mit einem Tank (12), einer Pumpe (18), einer Zuführleitung (20), wenigstens einem Spritzdüsensystem (22, 24, 26, 28), einer Rückführleitung (30) und einem in der Rückführleitung (30) einen Unterdruck erzeugendes Mittel (32), **dadurch gekennzeichnet, dass** die Zuführleitung (20) ein Drosselmittel (36) enthält und zwischen Spritzdüsensystem (22, 24, 26, 28) und Rückführleitung (30) ein Steuerventil (38) angeordnet ist, wobei durch Schließen des Steuerventils (38) der durch die Pumpe (18) erzeugte Spritzdruck am Spritzdüsensystem (22, 24, 26, 28) und durch Öffnen des Steuerventils (38) der in der Rückführleitung (30) erzeugte Unterdruck am Spritzdüsensystem (22, 24, 26, 28) anlegbar ist.

2. Spritzsystem nach Anspruch 1, **dadurch gekennzeichnet, dass** das in der Rückführleitung (30) einen Unterdruck erzeugende Mittel (32) ein Injektor ist.

3. Spritzsystem nach Anspruch 2, **dadurch gekennzeichnet, dass** der Injektor (32) durch die von der Pumpe (18) geförderte Flüssigkeit betreibbar ist, wobei die Flüssigkeit in einer der Zuführleitung (20) abgezweigten Injektorleitung (40) dem Injektor (32) zuführbar ist.

4. Spritzsystem nach einem der vorhergehenden Ansprüche, **dadurch gekennzeichnet, dass** das Drosselmittel (36) einen Austrittsquerschnitt besitzt, der größer oder gleich dem gesamten Auslassquerschnitt des Spritzdüsensystems (22, 24, 26, 28) ist.

5. Spritzsystem nach einem der vorhergehenden Ansprüche, **dadurch gekennzeichnet, dass** mehrere Spritzdüsensysteme (22, 24, 26, 28) enthalten sind, die parallel mit der Zu-und Rückführleitung (20, 30) verbunden sind.

6. Spritzsystem nach Anspruch 5, **dadurch gekennzeichnet, dass** jedem Spritzdüsensystem (22, 24, 26, 28) ein Drosselmittel (36) in der Zuführleitung (20) und ein Steuerventil (38) zugeordnet ist, so dass an den Spritzdüsensystemen (22, 24, 26, 28) unabhängig voneinander ein Spritzdruck oder ein Unterdruck anlegbar ist.

7. Spritzsystem nach einem der Ansprüche 3 bis 6, **dadurch gekennzeichnet, dass** in der Zuführleitung (20) ein oder mehrere Druckregler (44, 46) enthalten sind und der Druck in der Injektorleitung (40) und in der Zuführleitung (20) unabhängig voneinander regulierbar ist.

8. Spritzsystem nach einem der vorhergehenden Ansprüche, **dadurch gekennzeichnet, dass** das Drosselmittel (36) von einer Verengung in der Zuführleitung (20) oder von einem gesondert eingefügten Drosselmittel (36), insbesondere einer in die Zuführleitung (20) eingebrachten Blende gebildet wird.

## Revendications

1. Système de pulvérisation comportant un réservoir (12), une pompe (18), une conduite d'admission (20), au moins un système de buses de pulvérisation (22, 24, 26, 28), une conduite de retour (30) et un moyen (32) générant une dépression dans la conduite de retour (30), **caractérisé en ce que** la conduite d'admission (20) contient un moyen d'étranglement (36), et une vanne pilote (38) est agencée entre le système de buses de pulvérisation (22, 24, 26, 28) et la conduite de retour (30), la pression de pulvérisation générée par la pompe (18) étant appliquée au système de buses de pulvérisation (22, 24, 26, 28) sous l'effet de la fermeture de la vanne pilote (38) et la dépression générée dans la conduite de retour (30) étant appliquée au système de buses de pulvérisation (22, 24, 26, 28) sous l'effet de l'ouverture de la vanne pilote (38).

2. Système de pulvérisation selon la revendication 1, **caractérisé en ce que** le moyen (32) générant une dépression dans la conduite de retour (30) est un injecteur.

3. Système de pulvérisation selon la revendication 2, **caractérisé en ce que** l'injecteur (32) est apte à être actionné par le liquide refoulé par la pompe (18), le liquide pouvant être acheminé vers l'injecteur (32) dans une conduite d'injection (40) dérivant de la conduite d'admission (20).

4. Système de pulvérisation selon l'une quelconque des revendications précédentes, **caractérisé en ce que** le moyen d'étranglement (36) a une section de sortie qui est supérieure ou égale à la section de sortie globale du système de buses de pulvérisation (22, 24, 26, 28).

5. Système de pulvérisation selon l'une quelconque des revendications précédentes, **caractérisé en ce que** plusieurs systèmes de buses de pulvérisation (22, 24, 26, 28) sont prévus, lesquels sont reliés en parallèle à la conduite d'admission (20) et à la conduite de retour (30).

6. Système de pulvérisation selon la revendication 5, **caractérisé en ce qu'**à chaque système de buses de pulvérisation (22, 24, 26, 28) est associé un moyen d'étranglement (36) dans la conduite d'admission (20) et une vanne pilote (38), de telle sorte qu'il est possible d'appliquer une pression de pulvérisation ou une dépression aux systèmes de buses de pulvérisation (22, 24, 26, 28), indépendamment les uns des autres.

7. Système de pulvérisation selon l'une quelconque des revendications 3 à 6, **caractérisé en ce qu'**un ou plusieurs régulateurs de pression (44, 46) sont montés dans la conduite d'admission (20) et la pression dans la conduite d'injection (40) et dans la conduite d'admission (20) peut être régulée indépendamment l'une de l'autre.

8. Système de pulvérisation selon l'une quelconque des revendications précédentes, **caractérisé en ce que** le moyen d'étranglement (36) est formé par un rétrécissement dans la conduite d'admission (20) ou par un moyen d'étranglement (36) introduit séparément, en particulier un diaphragme monté dans la conduite d'admission (20).

## Claims

1. A spraying system with a tank (12), a pump (18), a feed line (20), at least one spray nozzle system (22, 24, 26, 28), a feedback line (30) and means (32) creating a negative pressure in the feedback line (30), **characterized in that** the feed line (20) includes a flow restriction (36) and a control valve (38) is arranged between the spray nozzle system (22, 24, 26, 28) and the feedback line (30), whereby the spraying pressure created by the pump (18) can be applied to the spray nozzle system (22, 24, 26, 28) by closing the control valve (38) and the negative pressure created in the feedback line (30) can be applied to the spray nozzle system (22, 24, 26, 28) by opening the control valve (38).

2. A spraying system according to claim 1, **characterized in that** the means (32) creating a negative pressure in the feedback line (30) is an injector.

3. A spraying system according to claim 2, **characterized in that** the injector (32) is operable by fluid supplied from the pump (18), wherein the fluid can be fed to the injector (32) in an injector line (40) branched off the feed line (20).

4. A spraying system according to any of the preceding claims, **characterized in that** the flow restriction (36) has a delivery cross-section which is greater than or equal to the whole delivery cross-section of the spray nozzle system (22, 24, 26, 28).

5. A spraying system according to any of the preceding claims, **characterized in that** there is a plurality of spray nozzle systems (22, 24, 26, 28) which are connected in parallel to the feed and feedback lines (20, 30).

6. A spraying system according to claim 5, **characterized in that** a flow restriction (36) in the feed line (20) and a control valve (38) are associated with each spray nozzle system (22, 24, 26, 28), so that a spraying pressure or a negative pressure can be applied to the spray nozzle systems (22, 24, 26, 28) independently of one another.

7. A spraying system according to any of claims 3 to 6, **characterized in that** one or more pressure regulators (44, 46) are included in the feed line (20) and the pressures in the injector line (40) and in the feed line (20) can be regulated independently of one another.

8. A spraying system according to any of the preceding claims, **characterized in that** the flow restriction (36) is formed by a narrowing in the feed line (20) or by a separately inserted flow restriction (36), in particular an orifice fitted in the feed line (20).
